Europäisches Patentamt

European Patent Office

Office européen des brevets

(11) Publication number: **0 309 948**
**A2**

## EUROPEAN PATENT APPLICATION

(21) Application number: 88115761.4

(22) Date of filing: 24.09.88

(51) Int. Cl.⁴: **G02B 3/00**

(30) Priority: 28.09.87 US 103135

(43) Date of publication of application:
05.04.89 Bulletin 89/14

(84) Designated Contracting States:
DE FR GB

(84) Designated Contracting States:
DE FR GB

(71) Applicant: HONEYWELL INC.
Honeywell Plaza
Minneapolis Minnesota 55408(US)

(72) Inventor: Maglic, Rastko C.
3010 Springmeadow Drive
Colorado Springs Colorado 80906(US)

(74) Representative: Rentzsch, Heinz et al
Honeywell Europe S.A. Holding KG Patent &
License Dept. Postfach 10 08 65
Kaiserleistrasse 39
D-6050 Offenbach am Main(DE)

(54) Lenslet array and method for providing apertures on lenslet arrays.

(57) A method for forming an aperture pattern of light blocking material (22) between the lenslets (12, 14, 16) of a lenslet array (10) so as to prevent unwanted radiation from reaching the radiation detectors (A, B) in the area beneath the lenslets by exposing a photoresist material which has been formed over the array to ultraviolet light for a predetermined time sufficient to expose the photoresist material to sufficient radiation in the area between the lenslets, but not over the lenslets because the flux density there is less than between the lenslets and thereafter forming light blocking material between the lenslets.

Fig. 1

## LENSLET ARRAY AND METHOD FOR PROVIDING APERTURES ON LENSLET ARRAYS

The present invention relates to an aperture pattern for use on a lenslet array and the process by which the apertures are formed on the array.

Lenslet arrays have been used for sometime in connection with autofocus cameras of the type shown in the US-A 4,185,191. In such a system, a plurality of lenslets are formed in a material such as plastic or glass and each lenslet receives radiation from the taking lens of the camera so as to produce an image of the exit pupil on a pair of detectors located behind the lenslet. The lenslets are spaced apart, usually in two parallel rows, with flat areas between the lenslets. It is desired that each detector pair receive only that radiation which has passed through the lenslet above them and that all other radiation transmitted through the material from other sources be blocked. Of course, the flat area between the lenslets will transmit radiation and often this radiation will undesirably strike the detectors.

To overcome this problem, an aperture is often employed to fill in the spaces between lenslets and prevent light from passing therethrough. In the prior art, this aperture has been made in several ways. For example, in US-A 4,425,501 an opaque sheet or card has a plurality of small apertures etched or otherwise formed therein and positioned so that it may be laid on top of the lenslets with the lenslets sticking through the apertures. Another technique is found in Japanese patent 55-106420 wherein light absorptive material is painted onto the areas around the lenslets to prevent light from passing therethrough. Yet another technique is described in US-A 4,695,719 wherein the aperture is formed by a process involving the deposition of a metal over the entire array, depositing a photoresist material over the metal, exposing the photoresist to light in only the lenslet areas, developing the photoresist to leave soft spots in the lenslet areas, washing the soft spots away to leave the metal and etching with an acid to carve the metal away at the soft spot areas.

Each of these prior art techniques has produced some problems. The difficulty with the opaque masking material is that the holes or apertures therein have to be very accurately positioned so that they overlay the lenslets exactly correctly which involves extreme accuracy that is difficult to achieve. The painting of an opaque material between lenslets is very labor intensive and the vacuum deposition process has the problem of exposing a photoresist to light only in the areas where the lenslets are to be located which involves the making of a mask and positioning it with extreme accuracy.

It is, therefore, the main object of the invention to provide an improved method of forming an aperture pattern on a lenslet array. This is achieved by the invention as characterized in the independent method claims. The invention also discloses a new lenslet array as characterized in the independent apparatus claims. Preferred details of the method and the lenslet array are described in the dependent claims.

The present invention overcomes the problems in the prior art by providing a self aligned aperture utilizing a vacuum deposition process, but instead of making a very exact mask and precisely aligning it so as to expose only the lenslet areas to the ultra violet photoresist setting light, the entire lenslet array is exposed to ultra violet light but for a controlled period of time. Since the lenslets have a curved surface, the flux density of light falling thereon will be less than the flux density of light falling on the flat areas in between the lenslets and accordingly the photoresist material will be exposed to more light on the flat surfaces than on the curved surfaces during the same period of time. Therefore, using a negative photoresist over the metal and by controlling the time of exposure, the flat surfaces may be hardened and the curved surfaces remain soft so that they can be washed away and the metal then etched away from the lenslets. Alternately, using a positive photo resist, the curved surfaces, receiving less light, may be hardened while the flat surfaces remain soft so that they may be washed away. Then, the aperture material can be deposited over the flat surfaces and over the photoresist on the curved surfaces. Thereafter, both photoresist and metal over the curved surfaces may be removed by an ultrasonic cleaning process. Either procedure provides a very accurate self aligned aperture covering the flat areas right up to the edge of the curved surfaces. The curvature of the lenslet is an important feature in producing a flux density difference that will cause one area to harden, but not the other. As a matter of fact, at the edges where the curved surface meets the flat surface, the angle of incidence of the exposing light approaches the critical angle for total internal reflection and accordingly, by directing the ultra violet light through the body of the material from the backside of the lenslets, the photoresist will not be exposed to light in these areas and the accurate control of the exact edge of the aperture is facilitated.

The invention will now be explained with reference to the drawings in which:

FIGURE 1 shows a cross-sectional view of three convex lenses in an array with an aperture material therebetween;

FIGURE 2 shows three concave lenses in an array with an aperture material therebetween;

FIGURE 3 shows an enlarged view of one of the lenslets with a layer of photoresist thereon;

FIGURE 4 shows the lenslet of FIGURE 3 with an aperture material over the whole surface; and

FIGURE 5 shows the lenslet of FIGURE 4 with the finished aperture thereon.

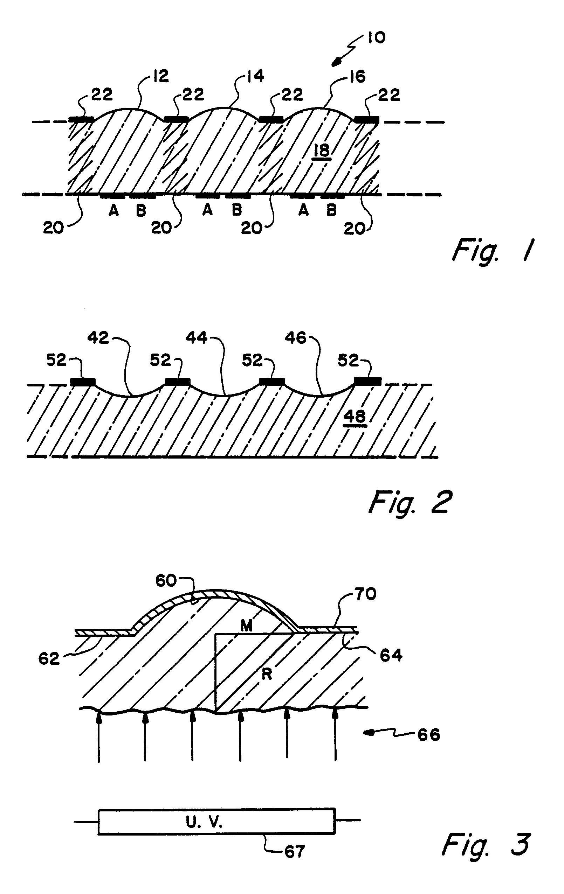

In FIGURE 1, three pairs of detectors identified as "A" and "B" detectors are shown beneath a portion of a lenslet array 10 having three convex lenslets 12, 14, and 16, formed in a base material 18, such as glass or plastic, by any suitable process such as that described in a EP-A 0 285 796 published October 12, 1988. Such a process produces a distributed aperture column 20 between the lenslets throughout the body of the glass 18 which may not be completely opaque but which nevertheless helps prevent radiation which has passed through one lenslet from crossing over and striking detectors in adjacent areas. In order to further prevent light from entering the area between the lenslets, the present invention includes an aperture 22 which is formed by a vacuum deposition technique to be hereinafter described and which may comprise a single opaque layer or which may comprise multiple layers. For example, a layer of light absorbing material, such as a metal oxide of aluminum or chromium, may be followed by a layer of radiation reflecting material, for example a metal such as nickel, aluminum or chromium, and then another layer of radiation absorbing material. The metal in such a sandwich-like aperture causes reflection of the light so that it does not enter into the glass 18 and the light absorbing materials absorb reflected light from both the interior of the glass 18 and from any reflecting surface exterior of the lenslet array 10 so as to more completely assure that the light striking the detectors is only the light passing through the lenslet above them. Since in FIGURE 1 the distributed aperture column 20 is a pretty good radiation blocking area itself, the underneath layer of radiation absorbing material may be omitted from the sandwich. The array 10 will, of course, normally contain a larger number of lenslets than the three shown and in auto focus camera systems, two parallel rows of 24 lenslets each is common.

In FIGURE 2, concave lenslets 42, 44, and 46 are shown which may be formed in a glass body 48 by a process which is described in US-A 4,695,719. The aperture 52 which may be the same sandwich arrangement as described in connection with FIGURE 1 is shown on the flat areas on either side of the concave lenses. The process for forming the apertures 22 and 52 in FIGURES 1 and 2 will be described hereinafter in connection with FIGURES 3-5.

FIGURE 3 shows an enlarged view of a single lenslet 60 formed as a portion of a sphere of radius R and lying between two flat portions 62 and 64 upon which it is desired to produce an aperture. The letter M represents half of the chord between the flat portions 62 and 64 or, the radius of the circle formed by the base of the lenslet 60. While the lenslet 60 is shown in the convex configuration like FIGURE 1, it should be understood that the concave configuration of FIGURE 2 may be used. The aperture 52 will be applied in the same manner in either case. Furthermore, since lenslet 60 may or may not be formed by the process described in the above mentioned EP-A 0 285 796, the distributed aperture portions 20 which were shown in FIGURE 1 have been omitted as they are not necessary in describing the present invention.

FIGURE 3 shows a plurality of vertical arrows 66 representing the transmission of radiation from a source of ultraviolet radiation 67 used for setting a photoresist layer 70 which has been applied over the entire upper surface including the lenslet 60 and the flat portions 62 and 64 on either side thereof. As is known in the art, the ultraviolet light operates, in the case of a positive photoresist, to allow the subsequent washing away of only the sufficiently exposed portions, and in the case of a negative photoresist, to allow the subsequent washing away of only the under exposed portions.

It is apparent from a consideration of FIGURE 3, that the flux density of the rays 66 will be greater in the flat areas 62 and 64 than on the curved surface 60. If, for example, the surface 60 constituted one quarter of a complete sphere, such a surface would have an area of 3.142 $R^2$ while the equivalent part of the flat portion i.e. the circle formed by the base of lenslet 60, would have an area of 3.142 $M^2$. Since R is greater tan M, the same amount of radiation is spread over the larger area of the lens, and the flux density on the lens will be less. In one experimental model where the R was about 200 microns and M was about 80 microns, the difference in area between the lens surface and the flat surface was about five percent. Accordingly, by exposing the photoresist layer 70 to a predetermined flux density for just the right amount of time, the setting of the desired parts thereof may be accomplished. In one specific example, using a negative photoresist and exposing it to a source of ultraviolet light of intensity 50 milliwatts per square centimeter, as measured at the lenslets, for a period of four seconds hardened the photo resist layer on the flat areas 62 and 64, but not on the curved lenslet 60. Subsequent washing of the lenslet array, in this example, would remove the material above the surface 60 but not the material of the surfaces 62 and 64. Accordingly, if an opaque material had been formed under the photoresist, the aperture would be formed and automatically aligned in a simple straightforward manner without requiring a mask or the accuracy and the labor intensive effort that was required by the prior art.

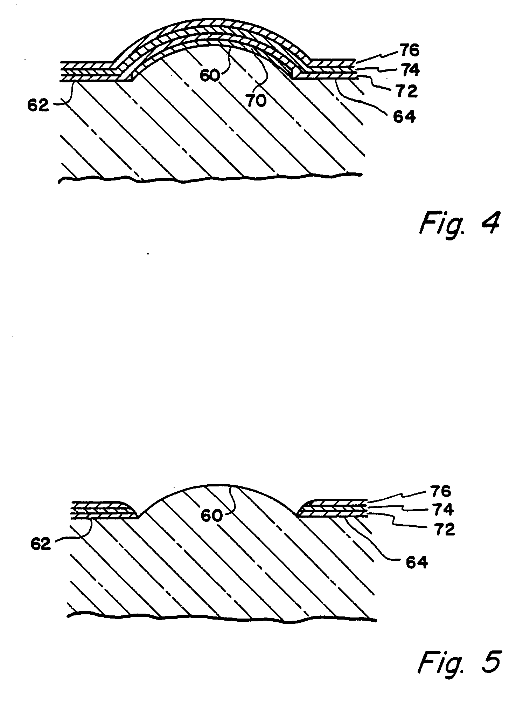

If a positive photo resist was used, then, the portion above the lenslet 60 would be hardened by the exposure and only the photoresist above the soft flat portions 62 and 64 would be washed away. This is the situation which will be described in connection with FIGURES 4 and 5.

In FIGURE 4, the photoresist layer 70 has been washed away over the flat portions 62 and 64 but has been left above the curved lenslet 60. Now on top of the entire surface the aperture is deposited which, in FIGURE 4 comprises a layer of light absorbing material 72 such as aluminum oxide, a layer of light reflecting material 74 such as nickel, and another layer of light absorbing material 76. As seen, only the lenslet has a layer of photoresist 70 left thereon and accordingly, when the array is exposed to ultrasonic cleaning, only the layers over the lenslet 60 will be removed. Such is the situatin seen in FIGURE 5.

FIGURE 5 shows the lenslet 60 free of any material thereover while the flat portions 62 and 64 have the sandwiched aperture thereon. This is the ideal arrangement for the array when used in an autofocus camera. The edges of the aperture are clean and exact which effect is enhanced by the fact that at the line where the curved surface meets the flat surface, the angle of incidence of the ultra violet light 66 in FIGURE 3, approaches the critical angle of total internal reflection so that little or no light gets through at this line and the cutoff betwen sufficiently and insufficiently exposed photoresist is precisely there.

While the preferred embodiment has been shown in connection with the specific disclosures included herein, one skilled in the art will realize that many changes may be made to these disclosures without departing from the spirit of the invention. For example, while the ultraviolet light has been shown to be applied from the back of the array, it may easily be applied from the front since the flux density on the curved surface will still be less than the flux density on the flat areas. Furthermore, there are methods of using positive and negative photoresist and processes for removing the soft or hard portions other than those specifically described herein. Similarly, while an absorbing material has been used in combination with a reflective material to both absorb and block radiation, a reflecting metal may be deposited in a special way, i.e., electroless deposition, so that its surface is rough enough to dispurse light 150 tropically in which case, absorptive layers may not be needed.

## Claims

1. A method of selectively placing photoresist material on a lenslet array (10) having a first area comprising a plurality of curved lenslets (12, 14, 16; 42, 44, 46; 60) and a second area comprising flat areas (62, 64) between the lenslets **characterized by** the steps of:

A) applying a photoresist material over the first and second areas;

B) exposing the photoresist on both the first and second areas to ultraviolet light (66), the flux density thereof being greater on the second area than on the first area, for a predetermined period of time sufficient to harden the photoresist on one of the first and second areas but not the other; and,

C) removing the photoresist from said other of the first and second areas.

2. The method of claim 1, **characterized in that** wherein the photoresist of step (A) is a positive photoresist, and the photoresist hardens on the first area in step (B) and the photoresist is removed from the second area in step (C).

3. The method of claim 1, **characterized in that** the photoresist of step (A) is a negative photoresist, the photoresist hardens on the second area in step (B) and the photoresist is removed from the first area in step (C).

4. A method of forming an aperture on a lenslet array which includes a first area comprising curved lenslets (12, 14, 16; 42, 44, 46; 60) and a second area comprising flat surfaces (62, 64) between the lenslets, **characterized by** the steps of:

A) applying a light blocking material (72, 74, 76) over the first and second areas;

B) applying a photoresist over the light blocking material;

C) exposing the photoresist on both the first and second areas to ultraviolet light (66), the flux density thereof being greater on the second area than on the first area, for a predetermined period of time sufficient to harden the photoresist on one of the first and second areas but not the other; and

D) removing the photoresist and the light blocking material from the first area.

5. The method of claim 4, **characterized in that** the light blocking material of step (A) comprises a light reflecting material (74).

6. The method of claim 4 or 5, **characterized in that** the light blocking material of step (A) comprises at least one layer of light absorbing material (72, 76), and a layer of light reflecting material (74).

7. A method of forming an aperture on a lenslet array which includes a first area comprising a plurality of lenslets (12, 14, 16; 42, 44, 46; 60) and a second area comprising flat surfaces (62, 64) betweeen the lenslets, **characterized by** the steps of:

A) applying a photo resist material (70) over the first and second areas;

B) exposing the photoresist on both the first and second areas to ultraviolet light (66), the flux density there of being greater on the first area than on the second area, for a predetermined period of time sufficient to harden the photoresist on one the first area but not on the second area;

C) removing the photoresist (70) from the second area;

D) applying a light blocking material (72, 74, 76) over the first and second areas; and

E) removing the light blocking material and the photoresist from the first area.

8. The method of claim 7, **characterized in that** the photoresist material (70) is a positive photoresist.

9. The method of claim 7 or 8, **characterized in that** step (E) includes the step of ultrasonic cleaning the array.

10. The method of one of the claims 7 to 9, **charac terized in that** the light blocking material is a layer (74) of metal.

11. A method of forming an aperture on an array which has a first area comprising a plurality of lenslets (12, 14, 16; 42, 44, 46; 60) and a second area made up of flat surfaces (62, 64) between the lenslets, **characterized by** the steps of:

A) applying a layer of photoresist (70, 72 to 76) and a layer of light blocking material over the first and second areas;

B) exposing the photo resist on both the first and second areas to ultraviolet light (66) for a predetermined period of time, the flux density of the light being greater on the second area than on the frist area because of the curvature of the lenslets with the result that the exposure to light for the predetermined period of time causes a hardening of the photoresist on one of the first and second areas but not on the other;

C) removing the photoresist (70) and the light blocking material (72 - 76) from the first area.

12. The method of one of the preceding claims, **characterized in that** the light blocking material comprises two layers (72, 76) of light absorbing material with a layer (74) of light reflecting material therebetween.

13. The method of one of the preceding claims, **characterized in that** the light reflecting material (74) is a metal.

14. The method of claim 13, **characterized in that** the light reflecting material is nickel.

15. The method of claim 12, 13 or 14, **characterized in that** the light absorbing material is an oxide of metal.

16. The method of claim 13 or 14, **characterized in that** step (C) includes etching the metal with an acid.

17. The method of claim 13 or 14, **characterized in that** step (C) includes removing the metal by ultra sonic cleaning.

18. The method of claim 13, **characterized by** depositing a metal layer by electroless deposition to form the light blocking material.

19. An apertured lenslet array (10) **characterized by**:

a) a plurality of curved lenslets (12, 14, 16; 42, 44, 46; 60) formed in a base material so that there are flat areas (62, 64) therebetween;

b) a layer of light reflecting material (74) only on the flat areas (62, 64) to block light from entering the base material between the lenslet; and

c) a layer of light absorbing material (72, 76) on the light reflecting material to absorb light between the lenslets.

20. An apertured lenslet array (10), **characterized by** :

a) plurality of curved lenslets (12, 14, 16; 42, 44, 46; 60) formed in a base material so that there are flat areas (62, 64) therebetween;

b) a layer of light absorbing material (72) on the flat areas (62, 64) to absorb any light reflected inside the base material;

c) a layer of light reflecting material (74) on the light absorbing material (72) to block light from entering the base material through the flat areas; and

d) a layer of light absorbing material (76) on the light reflecting material (74) to absorb any light reflected from outside the base material.

21. The apparatus of claim 19 or 20, **characterized in that** the light absorbing material (72, 76) is metal oxide and the light reflecting material (74) is metal, preferably is nickel.

Fig. 1

Fig. 2

Fig. 3

U. V.

EP 0 309 948 A2

Fig. 4

Fig. 5